# EUROPEAN PATENT SPECIFICATION

(11) **EP 2 152 032 B1**
(45) Date of publication and mention of the grant of the patent: **03.10.2012**
(21) Application number: 08104988.4
(22) Date of filing: 07.08.2008
(51) Int. Cl.: H04W 12/02, H04L 29/06

(54) **Providing lawful intercept information at a network element being assigned to a cell of a mobile telecommunication network**
Bereitstellung von Informationen aus gesetzmäßiger Telekommunikationsüberwachung auf ein Netzwerkelement, das einer Zelle eines mobilen Telekommunikationsnetzwerks zugeordnet wurde
Fourniture d'informations d'interception sur un élément de réseau attribué à une cellule d'un réseau de télécommunication mobile

(43) Date of publication of application: 10.02.2010
(73) Proprietor: Nokia Siemens Networks OY, 02610 Espoo (FI)
(72) Inventor: Dillinger, Markus, 82041 Oberhaching (DE); Schwarzbauer, Hanns Jürgen, Dr., 82194 Gröbenzell (DE)
(74) Representative: Bruglachner, Thomas E.

(56) References cited:
- EP-A- 1 575 251
- NORTEL: "LTE Local Breakout for Home eNB" 3GPP DRAFT; R3-081247_INTHENB_10.1.2A_LTEHENBDEP.REV0, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. tsg_ran\WG3_Iu\TSGR3_60\docs, no. Kansas City, USA; 20080505, 30 April 2008 (2008-04-30), XP050164427
- "3rd Generation Partnership Project;Technical Specification Group Radio Access Network;Home (e)NodeB;Network aspects(Release 8)" 3GPP DRAFT; DRAFT TR_R3.020_V0.7.0, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 11 May 2008 (2008-05-11), XP050143288
- ERICSSON: "Lawful Intercept for Evolved Packet System (EPS): involved nodes and events" 3GPP DRAFT; SA3LI008_006 DP_LI_FOR_EPS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. tsg_sa\WG3_Security\TSGS3_LI\2008_28_Sophi a\Docs, no. Sophia; 20080205, 29 January 2008 (2008-01-29), XP050282134

## Description

Providing lawful intercept information at a network element being assigned to a cell of a mobile telecommunication network

### Field of invention

The present invention relates to the field of lawful interception of traffic within telecommunication networks. In particular, the present invention relates to a method for providing lawful intercept information in a network element being assigned to a cell of a mobile telecommunication network. Further, the present invention relates to a network element for providing lawful intercept information to a lawful intercept entity of a telecommunication network. Furthermore, the present invention relates to computer-readable medium with a computer program and to a program element, wherein the computer program and the program element, when being executed by a data processor, are adapted for controlling the above mentioned method.

### Art Background

Operators of telecommunications networks are obliged to provide facilities to intercept the traffic originated and/or terminated by any of their subscribers upon legal request. It is assumed that due to legal aspects it will not be allowed in all cases to pass this obligation for certain traffic segments such as packet switched (PS) data to the operator of another network like a Fixed Network Operator (FNO).

Typically, the functionality to provide lawful interception is provided by entities located in a mobile core network. This entities are called lawful interception entities (LI). A fixed network operator (FNO) has usually no possibility to intercept the data traffic which originates at a so called Femto Access Point (FAP), because the corresponding user equipment (UE) of the subscriber being supposed to be intercepted is hidden behind a network address translation (NAT). Further, the fact that user traffic is intercepted has to be concealed from the intercepted user.

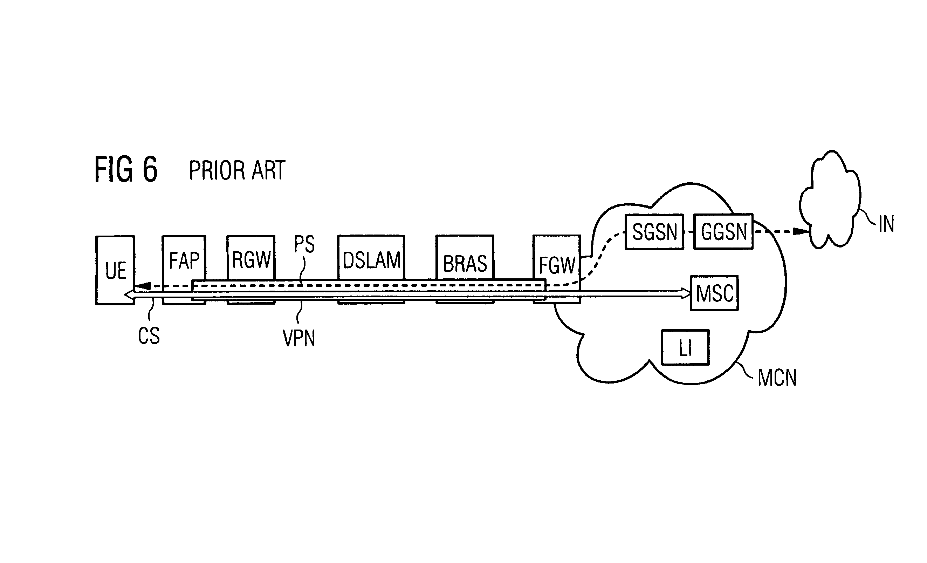

Figure 6 shows a prior art data transmission scenario in a telecommunication network, wherein both circuit switched data traffic (CS) and packet switched data traffic (PS) are transmitted between a user equipment (UE) being connected to a femto access point (FAP) and a mobile core network (MCN) via a virtual private network tunnel (VPN). The VPN extends between the FAP and a femto gateway (FGW) of the MCN. As can be seen from Figure 6, in between the FAP and the FGW, the VPN is established via a Residential Gateway (RGW), a DSL Access Multiplexer (DSLAM) and a Broadband Remote Access Server (BRAS). All CS and PS communication which originates and/or which terminates at the UE is carried out via the MCN. The CS communication is carried out via a Mobile Switching Center (MSC) of the MCN. The PS communication to the Internet (IN) is carried out via a Serving GPRS Support Node (SGSN) and a Gateway GPRS Support Node (GGSN).

A lawful intercept entity (LI) is located in the MCN. Upon legal request, the LI is capable of monitoring both the CS and the PS. In other words, the interception point could be kept in the MCN as it is the case in the classical radio network scenario. No support from the FAP or the FGW is required in order to carry out a lawful intercept procedure.

However, for a mobile network operator having deployed Femto Access Points, the lawful intercept functionality located in the MCN is only able to perform its intended function as long as there is no break-out of User traffic already at the FAP. However, this break-out of especially packet switched user traffic is highly desirable from a mobile network operator's point, as the Digital Subscriber Line (DSL) up-stream is usually a scarce resource. Any traffic carried via a Virtual Private Network tunnel (VPN) established between the FAP and a Femto Access Gateway has the VPN overhead added. This results in an increased traffic volume. Therefore, bypassing the VPN especially for PS traffic destined to the public internet is highly desirable. However, also for this traffic lawful interception needs to be possible, but the lawful interception functionality located in the MCN could no longer be looped in. Hence a different solution is required, but this solution still has to be undetectable by the intercepted user.

The simplest straightforward methods to solve lawful intercept in case of a data traffic break-out at the femto access point are:
1) Simply disable the data traffic break-out in case lawful intercept is to be performed. However, this has the disadvantage that it is easily detectable by the intercepted end-user by applying for instance a packet trace tool. This tool might either trace the traffic on the DSL line or within the Local Area Network (LAN) of the intercepted end-user.
2) Duplicate the "break-out data traffic" and forward this duplicated traffic via the VPN to the lawful intercept functionality residing in the mobile core network. This provides the advantage that a lawful intercept measure being based on duplicated data traffic may be undetectable by the intercepted end-user if the VPN provides enough available bandwidth for transmitting the duplicated data traffic. However, if this is not the case the lawful intercept measure will be detectable due to performance degradations caused by the additional traffic volume send via the VPN. However, this potential performance degradation is only detectable by the intercepted subscriber, if the bandwidth available on the DSL line in up-stream direction is a scarce resource. In case of for instance a Very High Speed DSL (VDSL) line, this might no longer hold true.

The document 3rd Generation Partnership Project; Technical Specification Group Radio Access Network; Home(e)NodeB; Network aspects(Release 8)", DRAFT TR R3.020 V0.7.0, 11 May 2008 describes several architecture proposals concerning the integration of a Home(e)NodeB into a 3GPP mobile network of 3G and LTE. Some proposals describe how user traffic destined to the Internet breaks out locally at the Home(e)NodeB.

The document "LTE Local Breakout for Home eNB", Nortel, R3-081247, 3RD GENERATION PARTNERSHIP PROJECT (3GPP) TSG-RAN WG3 Meeting #60, Kansas City, USA; 30 April 2008 (2008-04-30) describes an architecture where user traffic destined to the Internet breaks out locally at a Home(e)NodeB.

There may be a need for improving lawful intercept measures for a network element being assigned to a cell of a mobile telecommunication network, wherein the intercept measures works also in case of a data traffic break-out already at this network element and wherein the lawful intercept measures is undetectable for the intercepted end-user even if the data connection between the network element and a mobile core network comprises a limited bandwidth.

### Summary of the Invention

This need may be met by the subject matter according to the independent claims. Advantageous embodiments of the present invention are described by the dependent claims.

According to a first aspect of the invention there is provided a method for providing lawful intercept information in a network element being assigned to a cell of a telecommunication network, wherein the network element is connected to a mobile core network of the telecommunication network and the network element allows a user equipment being connected to the network element to communicate with an internet host while bypassing the mobile core network. The provided method comprises (a) generating information in the network element about data being transmitted between the user equipment and the internet host via the network element while bypassing the mobile core network, and (b) providing this information as lawful intercept information to a lawful intercept entity of the telecommunication network. The step of providing the lawful intercept information to the lawful intercept entity further comprises transmitting the lawful intercept information from the network element being assigned to the cell to a base station via a radio transmission link.

The described method is based on the idea that lawful intercept information can reliably be provided even if a so called data transmission breakout is carried out wherein data between the network element and any third internet host are transmitted without involving the mobile core network. The lawful intercept entity may be any entity of the whole telecommunication network, which is adapted to evaluate the lawful intercept information such that conclusions can be drawn about the data being transmitted between (a) the user equipment being connected to the network element and (b) any third entity of the telecommunication network. This third entity may be a further user equipment, which is not attached to the mobile core network.

The data representing the basis for the generation of the information respectively the lawful intercept information includes at least the data, which are exchanged between the network element and the internet host while bypassing the mobile core network. This is a very important point because typically this data cannot be intercepted by the lawful intercept entity, if the lawful intercept entity is assigned to the mobile core network. Of course, since the network element itself does not generate data on its own this data representing the basis for the information generation is also exchanged between the user equipment and the network element. However, it is pointed out that also the data being exchanged via the mobile core network with any other entity of the telecommunication entity may be included in the database for forming the lawful intercept information.

The user equipment and/or the further user equipment may be any type of communication end device, which is capable of connecting (a) with an arbitrary telecommunication network access point such as a base station or a relay node and/or (b) with the described network element being assigned to the cell. Thereby, the connection may be established by means of a wired and/or a wireless transmission link. In particular the user equipment may be a cellular mobile phone, a Personal Digital Assistant (PDA), a notebook computer and/or any other mobile communication device.

The cell may be for instance a so called femtocell representing a small cellular region of the overall telecommunication network, wherein the femtocell is served by the network element and wherein the femtocell is located at the premises of a customer of an internet service provider, of a mobile network operator and/or of any other telecommunication service provider.

Typically, the network element is a cellular access point that connects the user equipment to the mobile network using a residential digital subscriber line (DSL) or cable broadband connections or any other means providing broadband communications. The femtocell may operate with a range of different cellular standards including Code Division Multiple Access (CDMA), Global System for Mobile telecommunication (GSM), Universal Mobile Telecommunication System (UMTS) and also Long Term Evolution (LTE).

The internet host may be a computer or any programmable device which is assigned to the telecommunication network. In particular, the internet host may be used by the user equipment being assigned to the Femtocell as an intermediate network element for transmitting data with the further User Equipment.

The data generation in the network element may be triggered by a lawful request. This request may be forwarded to the network element via the mobile core network.

It has to be mentioned that the described femtocell represents just a special type a base station. In particular, the described method for providing lawful intercept information can be carried out within LTE telecommunication networks.

According to an embodiment of the invention the lawful intercept entity is assigned to the mobile core network. This may provide the advantage that the described method can be easily realized with known hardware components.

In particular, a known lawful intercept entity can be used which according to prior art lawful interception is typically assigned to the mobile core network. This assignment of the lawful intercept entity is based on the matter of fact that at least at present typically the mobile network operator is responsible for providing appropriate facilities for a lawful interception of the subscribers of the Mobile Network Operator.

According to a further embodiment of the invention the step of providing the lawful intercept information to the lawful intercept entity comprises transmitting the lawful intercept information from the network element being assigned to the cell to a base station via a radio transmission link.

In particular, the lawful intercept information may comprise all data which have been exchanged between (a) the user equipment representing the intercepted communication terminal and (b) any other entity of the telecommunication network.

The base station may be any point of attachment of the mobile telecommunication network. In particular the base station may be a macro case station serving a cell of the mobile telecommunication network.

The described transmission of the lawful intercept information via the radio transmission link to a base station or a macro base station of a mobile network operator may provide the advantage that a completely separate communication facility is used for the corresponding data transmission. This may provide the advantage that even a technical highly skilled user will not be able to detect the measure of being lawfully intercepted by the lawful intercept entity.

The use of a radio transmission link between the network element respectively the femto access point (FAP) and the base station provides a completely different available transport mechanism for the lawful intercept information respectively for the intercepted data traffic. When establishing the described radio transmission link it can be positively exploited if the network element respectively the FAP is already in connection with the base station for instance because of synchronization purposes.

In other words, when the described radio transmission link is established the network element of the Femtocell respectively the FAP acts as a "relay user equipment" in case a lawful intercept is requested. Thereby, the femtocell respectively the FAP attaches to the nearby macro base station and establish a new communication path with the lawful intercept entity. As has already been stated above, this lawful intercept functionality is typically located in the mobile core network. The additional data traffic, which is caused by the lawful interception for instance due to a data duplication is transferred to the lawful interception entity via the air interface instead of being transferred via a VPN tunnel having a limited bandwidth.

The development of the described radio transmission link can also be interpreted that the network element respectively the FAP acts as a user equipment which is getting attached to a macro network via the base station. This further attachment of the network element respectively the FAP is not detectable by the end-user neither via a trace nor due to a potentially reduced performance of the VPN tunnel or any other data transmission link, because the VPN tunnel respectively the DSL line of the VPN tunnel is not used to carry the additional traffic caused due to lawful interception.

According to a further embodiment of the invention the step of providing the lawful intercept information to the lawful intercept entity comprises (a) determining the available bandwidth of the connection between the network element and the mobile core network for an upstream data transmission from the network element to the mobile core network and (b) if the determined available bandwidth exceeds a predetermined value, transmitting the lawful intercept information via the connection between the network element and the mobile core network to the lawful intercept entity.

This may provide the advantage that in case a sufficient bandwidth of the already established data connection between the network element and the mobile core network is available, this bandwidth can be used for transmitting the lawful intercept information. Thereby, it is not expected that the intercepted user will detect the interception procedure if the available bandwidth is high enough that a degradation of the performance of the data connection is not expected. Typically, already a comparatively small fraction of the total bandwidth of for instance a DSL line representing the data connection between the network element and the mobile core network is larger than the typical available bandwidth of a radio transmission link.

Preferably, the data connection between the network element and the mobile core network is the above described VPN data tunnel.

According to a further embodiment of the invention the step of providing the lawful intercept information to the lawful intercept entity further comprises transmitting the lawful intercept information from the network element being assigned to the cell to a base station via a radio transmission link, if the determined available bandwidth does not exceed the predetermined value. This may provide the advantage that independent from the currently available bandwidth a reliable data connection can be used for transmitting the lawful intercept information from the network element to the lawful intercept entity.

In other words, first (a) the total available DSL up-stream bandwidth compared with the necessary up-stream bandwidth for the above mentioned VPN data tunnel is checked and second (b) the network element respectively the FAP decides according to a configured policy whether to use the remaining available DSL up-stream bandwidth or the macro BTS in order to transmit the intercepted traffic. The policy goal respectively the transmission path selection policy about the path being used for the transmission of the lawful intercept information is always not to disclose the intercepted traffic to the subscriber and to transmit the lawful intercept information to the lawful intercept entity. For instance a first policy may define that the VPN tunnel shall not consume more than a configurable percentage of the overall DSL up-stream bandwidth. A second policy may define that the VPN tunnel shall not consume more than a configurable maximum bandwidth. The policy may be based on information which can be provided from the network e.g., by a management system. The network may at least configure in the FAP the right lawful intercept entity to connect to, the right VPN tunnel to use, and the parameters for selecting the right transmission path in FAP.

According to a further embodiment of the invention the step of providing the lawful intercept information to the lawful intercept entity comprises connecting a specially authorized user equipment to the network element being assigned to the cell without a need to be locally authorized by the network element. The specially authorized user equipment may also be called a monitoring user equipment (MUE). The MUE may perform local investigations and/or survey local devices as will be indicated below in more detail.

The MUE may be treated by the lawful intercept entity as any other user equipment, which is assigned to the FAP. In other words, the lawful intercept entity may intercept the MUE directly respectively online. Additionally the MUE might capture and store the received and sent PS traffic locally respectively internally. However, this requires the MUE to be equipped with a storage device which is capable of storing all lawful intercept information, which can be later evaluated if the monitoring user equipment will be connected to the above described lawful intercept entity.

Generally speaking, the specially authorized MUE may be allowed to camp at the network element respectively at the FAP. Thereby, the camping should realized in such a manner, that the established connection between (a) the network element respectively the FAP and (b) the monitoring user equipment is not detectable even by a technically skilled user being supposed to be intercepted.

If the MUE requests access to the network, the network element respectively the FAP may grant access, forwarding information about the MUE being connected to any network node being related to the lawful interception entity. No further forwarding of that information, especially to intercepted customer, is done, thereby ensuring undetectable lawful intercept measures. The FAP may identify and/or authorize the UE as a MUE by a special identity which may be configured in the FAP via the network, e.g., by any network management entity.

In other words, in addition to the list of authorized user equipments a further specially authorized monitoring UE (MUE) may access the cell. Thereby, the FAP keeps the information about that specially authorized UE being connected secret. Therefore, the specially authorized UE will not be detectable. As a consequence, the whole interception procedure will be undetectable for the intercepted end-user.

The use of the MUE may provide the advantage that a lawful interception can be carried out by means of a so called "online search" of all the User Equipments respectively all the computers being connected to the same network domain as the FAP. Thereby, it may not be necessary to install first a special lawful intercept software on equipment in customer premises.

According to a further aspect of the invention there is provided a network element for providing lawful intercept information to a lawful intercept entity of a mobile telecommunication network. The described network element is adapted to span a cell within the mobile telecommunication network. The network element comprises (a) a first interface for connecting the network element with a user equipment, (b) a second interface for connecting the network element to a mobile core network of the telecommunication network, the second interface being adapted to connect the network element to an internet host while bypassing the mobile core network, (c) a unit for generating information about data being transmitted between the user equipment and the internet host via the network element while bypassing the mobile core network, and (d) a unit for providing this information as lawful intercept information to a lawful intercept entity, and (e) further comprises a radio interface adapted to connect to a base station, wherein the radio interface is adapted to transmit said lawful intercept information.

The base station may be any point of attachment of the mobile telecommunication network. In particular the base station may be a macro base station serving a cell of the mobile telecommunication network, which is adapted to serve a user equipment in order to connect the user equipment to the mobile telecommunication network.

The described network element is based on the idea that lawful intercept information can reliably be provided even if a so called data transmission breakout is carried out. In such a data transmission breakout data between the network element and any third internet host are transmitted without involving the mobile core network. The lawful intercept information may be generated simply by duplicating data traffic between the user equipment and the internet host. Preferably, the lawful intercept information is provided to the lawful intercept entity without disclosing the lawful intercept procedure to the intercepted subscriber.

It has to be mentioned that the described network element, which in particular may be a femto access point (FAP), may be adapted to carry out any embodiment of the above described method for providing lawful intercept information.

The network element may be connected to the mobile core network directly or via one or more other network nodes. In particular, the network element may be connected to the mobile core network via for instance a Residential Gateway, a DSL Access Multiplexer, a Broadband Remote Access Server and/or a Femto Gateway.

According to an embodiment of the invention the network element is a femto access point and the cell being spanned by the network element is a femtocell.

The owner of the femto access point, which hereinafter is abbreviated with FAP, may be able to grant individual authorization to known user and/or known user equipments

The FAP may be located at customer premises and/or may be adapted to provide a restricted access service to a limited number of user equipments, which are assigned to the femtocell of the telecommunication network. In particular, the owner of the network element, which may be a private person or a company, may issue individual authorizations for certain user equipments which are supposed to be allowed to attach to the FAP. By contrast thereto, a mobile network operator representing the owner of a base station of a cellular mobile telecommunication network typically allows any user equipment respectively any end-user to attach to the base station as long as the end-user of the user equipment is its costumer or at least a costumer of a commercially associated other mobile network operator.

According to a further embodiment of the invention the data being transmitted between the user equipment and the internet host via the network element while bypassing the mobile core network are packet switched data.

In this context Packet Switching (PS) is a communication method in which discrete blocks of data are routed between different nodes of the telecommunication network over data links that are shared with other data traffic. In each network node the data packets may be queued or buffered, resulting in variable delay. The data packets are typically self sufficient data without being assigned to a specific counterpart. The packet switched data may be exchanged between the user equipment respectively the network element and a Serving GPRS Support Node (SGSN).

According to a further embodiment of the invention the unit for generating information about data being transmitted between the user equipment and the internet host is adapted to duplicate data which have been sent to the user equipment and/or which have been received from the user equipment.

This may provide the advantage that all data which are transmitted between the user equipment and the internet host via the network element while bypassing the mobile core network can be provided to the lawful intercept entity. The lawful intercept entity may than accurately evaluate this data whether it contains legally relevant information.

According to a further embodiment of the invention the second interface is adapted to connect to the mobile core network via a virtual private network tunnel.

In the context of the present application this may mean that the above described data transmission breakout comprises at least a partial data transmission which is not carried out via the virtual private network (VPN) tunnel. Thereby, the VPN tunnel may be completely bypassed by branching off the data being transmitted between the user equipment and the internet host from the VPN tunnel already at the network element respectively the FAP.

It has to be mentioned that in case the network element and the mobile core network are connected with each other by a communication link not being limited to a VPN tunnel, the data can also be branched off at any network entity being involved in the communication link. In particular, the data may be branched off at a so called Broadband Remote Access Server (BRAS).

In other words the network element respectively the FAP supports the interception of the data traffic that is not sent via the VPN tunnel. Thereby, different methods for forwarding the intercepted data traffic to the centralized lawful intercept entity are possible:
(A) The lawful intercept information respectively the intercepted or duplicated data traffic can be transmitted via the existing VPN tunnel. However, in that case it may be possible that the thereby generated additional data traffic may be detected by a technically skilled user being supposed to be intercepted because of a possible performance degradation caused by the additional traffic in the VPN tunnel.
(B) Separate communication facilities may be used to send the lawful intercept information respectively the duplicated data traffic. This may provide the advantage that the data traffic on data paths which are known by a technically skilled user will not be changed. As a consequence, the additional data traffic will be completely undetectable even for a technically skilled end user.

According to a further embodiment of the invention the network element further comprises a radio interface adapted to connect to a base station, wherein the radio interface is (BRB): adapted the right term since the radio interface is the same interface as for other UE; adapted to transmit said lawful intercept information.

The base station may be any point of attachment of the mobile telecommunication network. In particular the base station may be a macro base station serving a cell of the mobile telecommunication network, which is adapted to serve a user equipment in order to connect the user equipment to the mobile telecommunication network.

According to a further embodiment of the invention the network element is adapted for determining the available bandwidth of the connection between the network element and the mobile core network for an upstream data transmission from the network element to the mobile core network. Further, the network element is adapted (a) for transmitting the lawful intercept information between the network element and the mobile core network via the second interface to the lawful intercept entity, if the determined available bandwidth exceeds a predetermined value, and (b) for transmitting the lawful intercept information from the network element being assigned to the cell to the base station via the radio interface, if the determined available bandwidth does not exceed the predetermined value.

This may provide the advantage that if a sufficient bandwidth of an already established data connection between the network element and the mobile core network is available, this bandwidth can be used for transmitting the lawful intercept information. Thereby, it is not expected that the intercepted user will be able to detect the interception procedure if the available bandwidth is high enough that a degradation of the performance of the data connection is not expected.

Generally speaking, first the total available DSL up-stream bandwidth compared with the necessary up-stream bandwidth for the above mentioned VPN data tunnel is checked and second the width or radio interface in order to transmit the intercepted traffic to the base station. Of course, the policy goal respectively the transmission path selection policy is always not to disclose the intercepted traffic to the subscriber and to transmit the lawful intercept information to the lawful intercept entity.

According to a further embodiment of the invention the network element is configured for executing at least one transmission path selection policy based on information related to a legal interception procedure.

The network element may be configured by the mobile telecommunication network in order to send the lawful intercept information to the right lawful intercept entity. The network element may also be configured for defining the at least one transmission path selection policy. The transmission path may depend on the actual data traffic which is transmitted via different transmission paths between the network element and the lawful intercept entity. For instance, a first possible transmission path might run via a virtual private network tunnel. A second possible transmission path might involve a radio link between the network element and a radio base station of the mobile telecommunication network. For selecting an appropriate transmission path between the network element and the lawful intercept entity it should be ensured that the owner of the network element is not able to recognize the lawful intercept procedure.

According to a further embodiment of the invention the network element is adapted (a) for evaluating the transmission path selection policy and (b) for transmitting the lawful intercept information to the lawful intercept entity according to the transmission path selection policy. In particular, the lawful intercept information can be transmitted to the lawful intercept entity via the above mentioned second interface or via the above mentioned radio interface.

According to a further embodiment of the invention the network element is adapted to grant access to the cell being spanned by the network element to a specially authorized monitoring user equipment, wherein the specially authorized monitoring user equipment is adapted to survey local devices.

The monitoring user equipment (MUE) may be any user equipment, which is adapted for surveying local communication end devices and/or for performing local investigations after the network element has granted access. Thereby, the access is granted without any authorization given by the owner of the network element. The network element may identify the specially authorized monitoring user equipment by a special identity and/or authorization. The identity and/or authorization may be configured in the network element via the network, e.g., by any network management entity.

According to a further aspect of the invention there is provided a computer-readable medium on which there is stored a computer program for providing lawful intercept information to a lawful intercept entity of a mobile telecommunication network. The computer program, when being executed by a data processor, is adapted for controlling the above described method for providing lawful intercept information to the lawful intercept entity.

According to a further aspect of the invention there is provided a program element for providing lawful intercept information to a lawful intercept entity of a mobile telecommunication network. The program element, when being executed by a data processor, is adapted for controlling the above described method for providing lawful intercept information to lawful intercept entity.

The computer program or the program element may be implemented as computer readable instruction code in any suitable programming language, such as, for example, JAVA, C++, and may be stored on a computer-readable medium (removable disk, volatile or non-volatile memory, embedded memory/processor, etc.). The instruction code is operable to program a computer or other programmable device to carry out the intended functions. The computer program may be available from a network, such as the WorldWideWeb, from which it may be downloaded.

The invention described in this patent application may be realized by means of a computer program respectively software. However, the invention may also be realized by means of one or more specific electronic circuits respectively hardware. Furthermore, the invention may also be realized in a hybrid form, i.e. in a combination of software modules and hardware modules.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this application.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

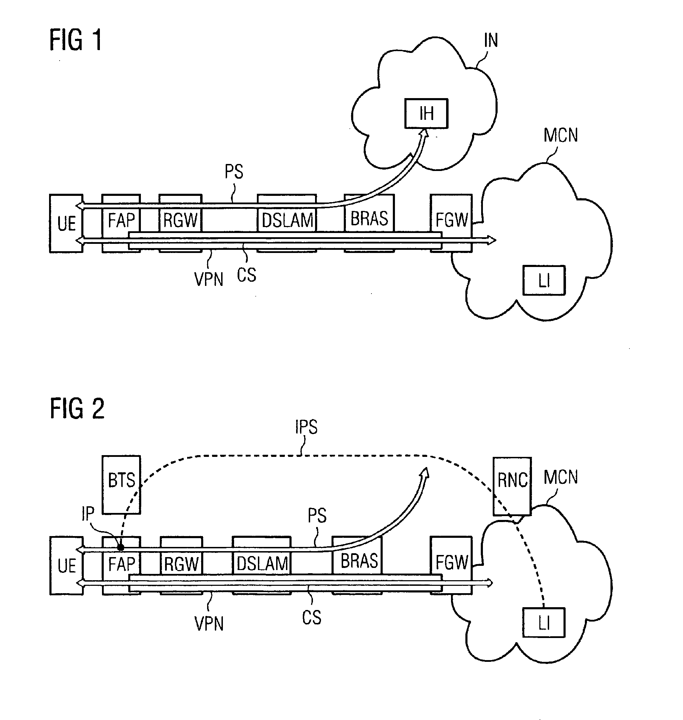

Figure 1 shows a data transmission scenario in a telecommunication network, wherein a circuit switched data traffic is transmitted between a user equipment and a mobile core network via a virtual private network tunnel and wherein a packet switched data traffic between the user equipment and an internet host is transmitted while bypassing the mobile core network.
Figure 2 shows a data transmission scenario, wherein intercept information about a packet switched data traffic bypassing a mobile core network is generated in a femto access point and wherein the generated intercept information is forwarded via a radio transmission link to a base transceiver station and further via an associated Radio Network Controller to the appropriate core network elements performing lawful interception.

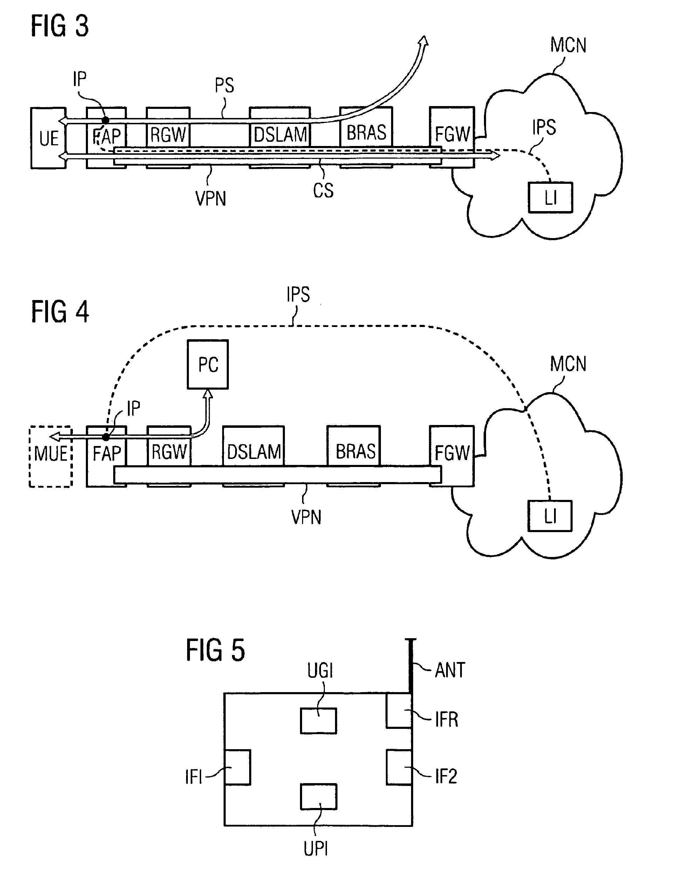

Figure 3 shows a data transmission scenario, wherein intercept information about a packet switched data traffic bypassing a mobile core network is generated in a femto access point and wherein the generated intercept information is transmitted to the mobile core network via a virtual private network tunnel in case there is available bandwidth on the Digital Subscriber Line up-stream.
Figure 4 shows an intercept scenario, wherein a specially authorized monitoring user equipment connects to a femto access point and providing lawful intercept information to a lawful intercept entity, wherein the monitoring user equipment is invisible for the owner of the femto access point.
Figure 5 shows a femto access point, which is adapted (a) to generate intercept information about a packet switched data traffic bypassing a mobile core network being connected to the femto access point via a virtual private network tunnel and (b) forwarding the generated intercept information via a radio transmission link to a base transceiver station.
Figure 6 shows a prior art data transmission scenario in a telecommunication network, wherein both circuit switched data and packet switched data are transmitted between a user equipment being connected to a femto access point and a mobile core network via a virtual private network tunnel extending between the femto access point and a Femto Gateway of the mobile core network.

### Detailed Description

The illustration in the drawing is schematically. It is noted that in different figures, similar or identical elements are provided with the same reference signs.

Figure 1 shows a data transmission scenario in a telecommunication network. Circuit switched data traffic (CS) is transmitted between a user equipment (UE) and a mobile core network (MCN) via a virtual private network tunnel (VPN). Packet switched data traffic (PS) between the UE and an internet host (IH) is transmitted while bypassing the MCN. The IH represents a network node of a core network such as the Internet (IN).

The UE is connected to a femto access point (FAP). A femto Gateway (FGW) is assigned to the MCN. The VPN extends between the FAP and the FGW. As can be seen from Figure 1, in between the FAP and the FGW, the VPN is established via a Residential Gateway (RGW), a DSL Access Multiplexer (DSLAM) and a Broadband Remote Access Server (BRAS).

A lawful intercept entity (LI) being assigned to the MCN is not able to intercept the PS, because the PS bypasses the MCN. In this application this bypassing of PS is also called a break-out, because the PS is not carried out via the VPN and does not be subject to the limitations of the VPN in particular with respect to the bandwidth. The break-out can be started at the FAP or any other suitable network element the VPN tunnel is passing through.

It will be easily understood that the LI can only be used for a lawful intercept procedure of PS if at least one another network element such as the FAP will give appropriate support. Of course this does not hold true for CS, which is still carried out via the MCN. Therefore, a not depicted interception point in the MCN could be used for a lawful intercept procedure of the CS.

Figure 2 shows a data transmission scenario, wherein intercept information about a PS bypassing the MCN is generated in the FAP. The CS, which is originating and/or terminating at the UE, is still carried out via the MCN through the VPN. According to the embodiment described here the intercept information is a duplication of the PS. The corresponding duplication procedure is carried out at an Interception Point (IP), which is located at the FAP. The FAP uses a macro Base Transceiver Station (BTS) in order to transfer the duplication of the PS via a Radio Network Controller (RNC) to the LI. According to the embodiment described here, the LI is located in the MCN.

All duplicated PS is subject to the lawful intercept procedure accomplished at the LI. Therefore, the duplicated PS, which is transferred to the LI outside from the VPN is also called intercepted packet switched data traffic (IPS). Since the IPS is predominantly transferred via air interfaces in Figure 2 the IPS is illustrated with a dashed line extending between the FAP and the LI via the BTS and the RNC.

Figure 3 shows a data transmission scenario, wherein intercept information about a PS bypassing the MCN is generated in the FAP. The CS, which is originating and/or terminating at the UE, is still carried out via the MCN through the VPN. According to the embodiment described here the intercept information is also a duplication of the PS bypassing the MCN. The corresponding duplication procedure is carried out at the IP, which is again located at the FAP. Since all duplicated PS is subject to the lawful intercept procedure accomplished at the LI, the duplicated PS, which is transferred to the LI is also called IPS. According to the embodiment described here the IPS is transmitted to the MCN assuming that the VPN has sufficient bandwidth available for upstream data transmission.

In order to make sure that the owner of the FAP or the user of the UE is not able to recognize the matter of fact of being intercepted, before using the additional bandwidth for the VPN the FAP has to make sure that there is enough bandwidth available such that a performance degradation of the data transmission link between the UE and the MCN can be reliably avoided. This means that the VPN is capable of carrying the additional data traffic in particular on a DSL line between the RGW and the DSLAM. According to the embodiment described here this additional data traffic is caused by the data packets of the bypassing PS, which are resent again via the VPN. Therefore, this solution for a lawful intercept procedure is preferable in case there are no serious constraints with respect to the DSL bandwidth between the RGW and/or the DSLAM.

Figure 4 shows an intercept scenario, wherein a specially authorized Monitoring user equipment (MUE) connects to the FAP. This MUE has to be invisible for the owner of the FAP in order to enable an effective intercept procedure. Due to the invisibility of the MUE, in Figure 4 the MUE is illustrated with a dashed box.

Generally speaking, the MUE is administratively allowed to camp on the FAP by administrative means. This camping is invisible to the owner of the FAP. As a consequence, the MUE can access any locally available data contents which might be stored for instance on a Personal Computer (PC) and/or any data traffic which might involve the PC. According to the embodiment described here the PC is connected to the FAP via a Residential Gateway (RGW). This connection between the PC and the FAP does not involve a Virtual Private Network tunnel (VPN).

If the MUE is marked as being subject to a lawful intercept procedure, all data traffic exchanged between this MUE and any local nodes in the same domain as the FAP will be available for the lawful intercept procedure.

According to the embodiment described here the MUE initiates a data duplication at the IP of the FAP. Thereby, IPS is generated which is transferred to the LI from an Interception Point (IP) of the FAP. The LI can be assigned for instance at the MCN.

It has to be mentioned that the lawful intercept procedure illustrated in Figure 4 may also be carried out with PS, which exhibits a break-out from the VPN. However, in addition to that, the lawful intercept procedure can also be carried out with any data traffic, which involves the FAP.

Figure 5 shows a femto access point (FAP) according to preferred embodiment of the present invention. The FAP comprises a first interface (IF1) for connecting the FAP with a user equipment, which is not depicted in Figure 5. The FAP further comprises a second interface (IF2) for connecting the FAP to a not depicted mobile core network of a telecommunication network. By means of the second interface (IF2) the FAP can be connected to an also not depicted internet host while bypassing the mobile core network. Further, the FAP is provided with a unit for generating information (UGI) about data being transmitted between the user equipment and the internet host via the FAP while bypassing the mobile core network. Further, the FAP comprises a unit (UPI) for providing this information as lawful intercept information to a lawful intercept entity being assigned to the not depicted mobile core network.

According to the embodiment described here the FAP is adapted to duplicate data which have been sent to the connected user equipment and/or which have been received from the connected user equipment. This duplicated data can be transmitted to the lawful intercept entity of the mobile core network via a radio transmission to a base station (not depicted). For transmitting the duplicated data, which according to the embodiment described here represent the lawful intercept information, to the lawful intercept entity, the FAP is provided with a radio interface (IFR) and with an antenna (ANT).

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

### List of reference signs:

- ANT: antenna
- BRAS: Broadband Remote Access Server
- BTS: Base Transceiver Station
- CS: circuit switched data traffic
- DSLAM: DSL Access Multiplexer
- FAP: Femto Access Point
- FGW: Femto Gateway
- GGSN: Gateway GPRS Support Node
- IF1: first interface
- IF2: second interface
- IFR: radio interface
- IH: internet host
- IN: Internet
- IP: Interception Point
- IPS: intercepted packet switched data traffic
- LI: lawful intercept entity
- MCN: mobile core network
- MSC: Mobile Switching Center
- MUE: Monitoring User Equipment
- PC: Personal Computer
- PS: packet switched data traffic
- RGW: Residential Gateway
- RNC: Radio Network Controller
- SGSN: Serving GPRS Support Node
- UE: User Equipment
- UGI: unit for generating lawful intercept information
- UPI: unit for providing lawful intercept information
- VPN: Virtual Private Network tunnel

## Claims

1. A method for providing lawful intercept information in a network element (FAP) being assigned to a cell of a mobile telecommunication network, wherein
- the network element (FAP) is connected to a mobile core network (MCN) of the telecommunication network, and
- the network element (FAP) allows a user equipment (UE) being connected to the network element (FAP) to communicate with an internet host (IH) while bypassing the mobile core network (MCN), the method comprising
• generating information (IPS) in the network element (FAP) about data (PS) being transmitted between the user equipment (UE) and the internet host (IH) via the network element (FAP) while bypassing the mobile core network (MCN), and
• providing this information as lawful intercept information (IPS) to a lawful intercept entity (LI) of the telecommunication network
wherein providing the lawful intercept information (IPS) to the lawful intercept entity (LI) comprises transmitting the lawful intercept information (IPS) from the network element (FAP) to a base station (BTS) via a radio transmission link.

2. The method as set forth in claim 1, wherein
the lawful intercept entity (LI) is assigned to the mobile core network (MCN).

3. The method as set forth in any one of the claims 1 to 2, wherein
providing the lawful intercept information (IPS) to the lawful intercept entity (LI) comprises
• determining the available bandwidth of the connection between the network element (FAP) and the mobile core network (MCN) for an upstream data transmission from the network element (FAP) to the mobile core network (MCN), and
• if the determined available bandwidth exceeds a predetermined value,
transmitting the lawful intercept information (IPS) via the connection between the network element (FAP) and the mobile core network (MCN) to the lawful intercept entity (LI).

4. The method as set forth in claim 3, wherein
providing the lawful intercept information (IPS) to the lawful intercept entity (LI) further comprises
• if the determined available bandwidth does not exceed the predetermined value,
transmitting the lawful intercept information (IPS) from the network element (FAP) being assigned to the cell to a base station (BTS) via a radio transmission link.

5. The method as set forth in any one of the claims 1 to 4, wherein
providing the lawful intercept information (IPS) to the lawful intercept entity (LI) comprises
• connecting a specially authorized user equipment (MUE) to the network element (FAP) being assigned to the cell without a need to be locally authorized by the network element (FAP).

6. A network element for providing lawful intercept information (IPS) to a lawful intercept entity (LI) of a mobile telecommunication network, wherein the network element is adapted to span a cell within the mobile telecommunication network, the network element (FAP) comprising
• a first interface (IF1) for connecting the network element (FAP) with a user equipment (UE),
• a second interface (IF2) for connecting the network element (FAP) to a mobile core network (MCN) of the telecommunication network, the second interface (IF2) being adapted to connect the network element (FAP) to an internet host (IH) while bypassing the mobile core network (MCN), **characterized by**
• a unit (UGI) for generating information about data being transmitted between the user equipment (UE) and the internet host (IH) via the network element (FAP) while bypassing the mobile core network (MCN),
• a unit (UPI) for providing this information as lawful intercept information (IPS) to a lawful intercept entity (LI), and
• a radio interface (IFR) adapted to connect to a base station (BTS) for transmitting said lawful intercept information (IPS).

7. The network element as set forth in claim 6, wherein
- the network element is a femto access point (FAP) and
- the cell is a femtocell.

8. The network element set forth in any one of the claims 6 to 7, wherein
the data being transmitted between the user equipment (UE) and the internet host (IH) via the network element (FAP) while bypassing the mobile core network (MCN) are packet switched data (PS).

9. The network element as set forth in any one of the claims 6 to 8, wherein
the unit for generating information (UGI) about data being transmitted between the user equipment (UE) and the internet host (IH) is adapted to
duplicate data (PS) which have been sent to the user equipment (UE) and/or which have been received from the user equipment (UE).

10. The network element as set forth in any one of the claims 6 to 9, wherein
the second interface (IF2) is adapted to connect to the mobile core network (MCN) via a virtual private network tunnel (VPN).

11. The network element as set forth in claim 6-10, wherein the network element (FAP) is adapted for
• determining the available bandwidth of the connection between the network element (FAP) and the mobile core network (MCN) for an upstream data transmission from the network element (FAP) to the mobile core network (MCN), and
the network element is further adapted for
• transmitting the lawful intercept information (IPS) between the network element (FAP) and the mobile core network (MCN) via the second interface (IF2) to the lawful intercept entity (LI), if the determined available bandwidth exceeds a predetermined value, and for
• transmitting the lawful intercept information (IPS) from the network element (FAP) being assigned to the cell to the base station (BTS) via the radio interface (IFR), if the determined available bandwidth does not exceed the predetermined value.

12. The network element as set forth in any one of the claims 6 to 11, wherein
the network element (FAP) is configured for executing at least one transmission path selection policy based on information related to a legal interception procedure.

13. The network element as set forth in claim 12, wherein the network element (FAP) is adapted for
- evaluating the transmission path selection policy and for
- transmitting the lawful intercept information (IPS) to the lawful intercept entity (LI) according to the transmission path selection policy.

14. The network element as set forth in any one of the claims 6 to 13, wherein
the network element (FAP) is adapted to grant access to the cell being spanned by the network element (FAP) to a specially authorized monitoring user equipment (MUE), wherein the specially authorized monitoring user equipment (MUE) is adapted to survey local devices.

15. A computer-readable medium on which there is stored a computer program for providing lawful intercept information (IPS) to a lawful intercept entity (LI) of a mobile telecommunication network, the computer program, when being executed by a data processor of a network element being assigned to a cell of the mobile communication network, is adapted for performing the method as set forth in any one of the claims 1 to 5.

16. A computer program for providing lawful intercept information (IPS) to a lawful intercept entity (LI) of a mobile telecommunication network, the program, when being executed by a data processor of a network element being assigned to a cell of the mobile communication network, is adapted for performing the method as set forth in any one of the claims 1 to 5.

## Patentansprüche

1. Verfahren zum Bereitstellen richterlicher Mithörinformationen in einem Netzelement (FAP), das einer Zelle eines Mobiltelekommunikationsnetzes zugewiesen ist, wobei
- das Netzelement (FAP) mit einem mobilen Kernnetz (MCN) des Telekommunikationsnetzes verbunden ist, und
- das Netzelement (FAP) zulässt, dass ein Teilnehmergerät (UE) mit dem Netzelement (FAP) verbunden wird, um mit einem Internet-Host (IH) zu kommunizieren, während das mobile Kernnetz (MCN) umgangen wird, wobei das Verfahren Folgendes umfasst:
• Erzeugen von Informationen (IPS) in dem Netzelement (FAP) über Daten (PS), die zwischen dem Teilnehmergerät (UE) und dem Internet-Host (IH) über das Netzelement (FAP) übertragen werden, während das mobile Kernnetz (MCN) umgangen wird, und
• Bereitstellen dieser Informationen als richterliche Mithörinformationen (IPS) für eine richterliche Mithörentität (LI) des Telekommunikationsnetzes,
wobei das Bereitstellen der richterlichen Mithörinformationen (IPS) für die richterliche Mithörentität (LI) das Senden der richterlichen Mithörinformationen (IPS) von dem Netzelement (FAP) an eine Basisstation (BTS) über eine Funkübertragungsstrecke umfasst.

2. Verfahren nach Anspruch 1, wobei
die richterliche Mithörentität (LI) dem mobilen Kernnetz (MCN) zugewiesen ist.

3. Verfahren nach einem der Ansprüche 1 bis 2, wobei
das Bereitstellen der richterlichen Mithörinformationen (IPS) für die richterliche Mithörentität (LI) Folgendes umfasst:
• Bestimmen der verfügbaren Bandbreite der Verbindung zwischen dem Netzelement (FAP) und dem mobilen Kernnetz (MCN) für eine Aufwärtsstreckendatenübertragung von dem Netzelement (FAP) zu dem mobilen Kernnetz (MCN), und
• falls die bestimmte verfügbare Bandbreite einen vorgegebenen Wert übersteigt,
Senden der richterlichen Mithörinformationen (IPS) über die Verbindung zwischen dem Netzelement (FAP) und dem mobilen Kernnetz (MCN) an die richterliche Mithörentität (LI).

4. Verfahren nach Anspruch 3, wobei
das Bereitstellen der richterlichen Mithörinformationen (IPS) an die richterliche Mithörentität (LI) ferner Folgendes umfasst:
• falls die bestimmte verfügbare Bandbreite den vorgegebenen Wert nicht übersteigt,
Senden der richterlichen Mithörinformationen (IPS) von dem Netzelement (FAP), das der Zelle zugewiesen worden ist, an eine Basisstation (BTS) über eine Funkübertragungsstrecke.

5. Verfahren nach einem der Ansprüche 1 bis 4, wobei das Bereitstellen der richterlichen Mithörinformationen (IPS) für die richterliche Mithörentität (LI) Folgendes umfasst:
• Verbinden eines speziell berechtigten Teilnehmergeräts (MUE) mit dem Netzelement (FAP), das der Zelle zugewiesen worden ist, ohne Notwendigkeit, durch das Netzelement (FAP) lokal berechtigt zu sein.

6. Netzelement zum Bereitstellen richterlicher Mithörinformationen (IPS) für die richterliche Mithörentität (LI) eines Mobiltelekommunikationsnetzes, wobei das Netzelement dafür ausgelegt ist, sich über eine Zelle innerhalb des Mobiltelekommunikationsnetzes zu erstrecken, wobei das Netzelement (FAP) Folgendes umfasst:
• eine erste Schnittstelle (IF1) zum Verbinden des Netzelements (FAP) mit einem Teilnehmergerät (UE),
• eine zweite Schnittstelle (IF2) zum Verbinden des Netzelements (FAP) mit einem mobilen Kernnetz (MCN) des Telekommunikationsnetzes, wobei die zweite Schnittstelle (IF2) dafür ausgelegt ist, das Netzelement (FAP) mit einem Internet-Host (IH) zu verbinden, während das mobile Kernnetz (MCN) umgangen wird, **gekennzeichnet durch**
• eine Einheit (UGI) zum Erzeugen von Informationen über Daten, die zwischen dem Teilnehmergerät (UE) und dem Internet-Host (IH) über das Netzelement (FAP) übertragen werden, während das mobile Kernnetz (MCN) umgangen wird,
• eine Einheit (UPI) zum Bereitstellen dieser Informationen als richterliche Mithörinformationen (IPS) für eine richterliche Mithörentität (LI), und
• eine Funkschnittstelle (IFR), die dafür ausgelegt ist, sich mit einer Basisstation (BTS) zu verbinden, um die richterlichen Mithörinformationen (IPS) zu senden.

7. Netzelement nach Anspruch 6, wobei
- das Netzelement ein Femto-Zugriffspunkt (FAP) ist und
- die Zelle eine Femtozelle ist.

8. Netzelement nach einem der Ansprüche 6 bis 7, wobei
die Daten, die zwischen dem Teilnehmergerät (UE) und dem Internet-Host (IH) über das Netzelement (FAP) übertragen werden, während das mobile Kernnetz (MCN) umgangen wird, paketvermittelte Daten (PS) sind.

9. Netzelement nach einem der Ansprüche 6 bis 8, wobei
die Einheit zum Erzeugen von Informationen (UGI) über Daten, die zwischen dem Teilnehmergerät (UE) und dem Internet-Host (IH) übertragen werden, ausgelegt ist zum
Duplizieren von Daten (PS), die an das Teilnehmergerät (UE) gesendet worden sind und/oder die von dem Teilnehmergerät (UE) empfangen worden sind.

10. Netzelement nach einem der Ansprüche 6 bis 9, wobei
die zweite Schnittstelle (IF2) dafür ausgelegt ist, sich über einen Tunnel eines virtuellen privaten Netzes (VPN) mit dem mobilen Kernnetz (MCN) zu verbinden.

11. Netzelement nach Anspruch 6-10, bei dem das Netzelement (FAP) ausgelegt ist zum:
• Bestimmen der verfügbaren Bandbreite der Verbindung zwischen dem Netzelement (FAP) und dem mobilen Kernnetz (MCN) für eine Aufwärtsstreckendatenübertragung von dem Netzelement (FAP) zu dem mobilen Kernnetz (MCN), und wobei das Netzelement ferner ausgelegt ist zum:
• Senden der richterlichen Mithörinformationen (IPS) zwischen dem Netzelement (FAP) und dem mobilen Kernnetz (MCN) über die zweite Schnittstelle (IF2) an die richterliche Mithörentität (LI), falls die bestimmte verfügbare Bandbreite einen vorgegebenen Wert übersteigt, und zum
• Senden der richterlichen Mithörinformationen (IPS) von dem Netzelement (FAP), das der Zelle zugewiesen worden ist, zu der Basisstation (BTS) über die Funkschnittstelle (IFR) falls die bestimmte verfügbare Bandbreite den vorgegebenen Wert nicht übersteigt.

12. Netzelement nach einem der Ansprüche 6 bis 11, wobei
das Netzelement (FAP) zum Ausführen wenigstens einer Sendewegauswahl-Richtlinie auf der Grundlage von Informationen, die sich auf eine richterliche Mithörprozedur beziehen, konfiguriert ist.

13. Netzelement nach Anspruch 12, wobei das Netzelement (FAP) ausgelegt ist zum
- Auswerten der Sendewegauswahl-Richtlinie und zum
- Senden der richterlichen Mithörinformationen (IPS) an die richterliche Mithörentität (LI) in Übereinstimmung mit der Sendewegauswahl-Richtlinie.

14. Netzelement nach einem der Ansprüche 6 bis 13, wobei
das Netzelement (FAP) dafür ausgelegt ist, für ein speziell berechtigtes Überwachungsteilnehmergerät (MUE) Zugriff auf die Zelle zu gewähren, über die sich das Netzelement (FAP) erstreckt, wobei das speziell berechtigte Überwachungsteilnehmergerät (MUE) zum Überprüfen lokaler Vorrichtungen ausgelegt ist.

15. Computerlesbares Medium, in dem ein Computerprogramm zum Bereitstellen richterlicher Mithörinformationen (IPS) für eine richterliche Mithörentität (LI) eines Mobiltelekommunikationsnetzes gespeichert ist, wobei das Computerprogramm dafür ausgelegt ist, das Verfahren nach einem der Ansprüche 1 bis 5 auszuführen, wenn es durch einen Datenprozessor eines Netzelements, das einer Zelle des Mobiltelekommunikationsnetzes zugewiesen ist, ausgeführt wird.

16. Computerprogramm zum Bereitstellen richterlicher Mithörinformationen (IPS) für eine richterliche Mithörentität (LI) eines Mobiltelekommunikationsnetzes, wobei das Programm dafür ausgelegt ist, das Verfahren nach einem der Ansprüche 1 bis 5 auszuführen, wenn es durch einen Datenprozessor eines Netzelements, das einer Zelle des Mobiltelekommunikationsnetzes zugewiesen ist, ausgeführt wird.

## Revendications

1. Un procédé de fourniture d'informations d'interception licites dans un élément de réseau (FAP) qui est attribué à une cellule d'un réseau de télécommunication mobile, dans lequel
- l'élément de réseau (FAP) est raccordé à un réseau central mobile (MCN) du réseau de télécommunication, et
- l'élément de réseau (FAP) permet à un équipement d'utilisateur (UE) d'être raccordé à l'élément de réseau (FAP) de façon à communiquer avec un hôte Internet (IH) tout en contournant le réseau central mobile (MCN), le procédé comprenant
• la génération d'informations (IPS) dans l'élément de réseau (FAP) relatives à des données (PS) qui sont transmises entre l'équipement d'utilisateur (UE) et l'hôte Internet (IH) par l'intermédiaire de l'élément de réseau (FAP) tout en contournant le réseau central mobile (MCN), et
• la fourniture de ces informations en tant qu'informations d'interception licites (IPS) à une entité d'interception licite (LI) du réseau de télécommunication,
dans lequel la fourniture des informations d'interception licites (IPS) à l'entité d'interception licite (LI) comprend la transmission des informations d'interception licites (IPS) de l'élément de réseau (FAP) à une station de base (BTS) par l'intermédiaire d'une liaison de transmission radio.

2. Le procédé selon la revendication 1, dans lequel l'entité d'interception licite (LI) est attribuée au réseau central mobile (MCN).

3. Le procédé selon l'une quelconque des revendications 1 à 2, dans lequel
la fourniture des informations d'interception licites (IPS) à l'entité d'interception licite (LI) comprend
• la détermination de la bande passante disponible de la connexion entre l'élément de réseau (FAP) et le réseau central mobile (MCN) pour une transmission de données vers l'amont de l'élément de réseau (FAP) au réseau central mobile (MCN), et
• si la bande passante disponible déterminée dépasse une valeur prédéterminée,
la transmission des informations d'interception licites (IPS) par l'intermédiaire de la connexion entre l'élément de réseau (FAP) et le réseau central mobile (MCN) à l'entité d'interception licite (LI).

4. Le procédé selon la revendication 3, dans lequel la fourniture des informations d'interception licites (IPS) à l'entité d'interception licite (LI) comprend en outre
• si la bande passante disponible déterminée ne dépasse pas la valeur prédéterminée,
la transmission des informations d'interception licites (IPS) de l'élément de réseau (FAP) qui est attribué à la cellule à une station de base (BTS) par l'intermédiaire d'une liaison de transmission radio.

5. Le procédé selon l'une quelconque des revendications 1 à 4, dans lequel
la fourniture des informations d'interception licites (IPS) à l'entité d'interception licite (LI) comprend
• la connexion d'un équipement d'utilisateur spécialement autorisé (MUE) à l'élément de réseau (FAP) qui est attribué à la cellule sans qu'il soit nécessaire d'être autorisé localement par l'élément de réseau (FAP).

6. Un élément de réseau pour la fourniture d'informations d'interception licites (IPS) à une entité d'interception licite (LI) d'un réseau de télécommunication mobile, dans lequel l'élément de réseau est adapté de façon à couvrir une cellule à l'intérieur du réseau de télécommunication mobile, l'élément de réseau (FAP) comprenant
• une première interface (IF1) pour la connexion de l'élément de réseau (FAP) à un équipement d'utilisateur (UE),
• une deuxième interface (IF2) pour la connexion de l'élément de réseau (FAP) à un réseau central mobile (MCN) du réseau de télécommunication, la deuxième interface (IF2) étant adaptée de façon à connecter l'élément de réseau (FAP) à un hôte Internet (IH) tout en contournant le réseau central mobile (MCN), **caractérisé par**
• une unité (UGI) pour la génération d'informations relatives à des données qui sont transmises entre l'équipement d'utilisateur (UE) et l'hôte Internet (IH) par l'intermédiaire de l'élément de réseau (FAP) tout en contournant le réseau central mobile (MCN),
• une unité (UPI) pour la fourniture de ces informations en tant qu'informations d'interception licites (IPS) à une entité d'interception licite (LI), et
• une interface radio (IFR) adaptée de façon à se connecter à une station de base (BTS), pour la transmission desdites informations d'interception licites (IPS).

7. L'élément de réseau selon la revendication 6, dans lequel
- l'élément de réseau est un point d'accès femto (FAP) et
- la cellule est une femtocellule.

8. L'élément de réseau selon l'une quelconque des revendications 6 à 7, dans lequel
les données qui sont transmises entre l'équipement d'utilisateur (UE) et l'hôte Internet (IH) par l'intermédiaire de l'élément de réseau (FAP) tout en contournant le réseau central mobile (MCN) sont des données à commutation de paquets (PS).

9. L'élément de réseau selon l'une quelconque des revendications 6 à 8, dans lequel
l'unité destinée à la génération d'informations (UGI) relatives à des données qui sont transmises entre l'équipement d'utilisateur (UE) et l'hôte Internet (IH) est adaptée de façon à
dupliquer les données (PS) qui ont été envoyées à l'équipement d'utilisateur (UE) et/ou qui ont été reçues de l'équipement d'utilisateur (UE).

10. L'élément de réseau selon l'une quelconque des revendications 6 à 9, dans lequel
la deuxième interface (IF2) est adaptée de façon à se connecter au réseau central mobile (MCN) par l'intermédiaire d'un tunnel de réseau privé virtuel (VPN).

11. L'élément de réseau selon l'une quelconque des revendications 6 à 10, dans lequel l'élément de réseau (FAP) est adapté pour
• la détermination de la bande passante disponible de la connexion entre l'élément de réseau (FAP) et le réseau central mobile (MCN) pour une transmission de données vers l'amont de l'élément de réseau (FAP) au réseau central mobile (MCN), et
l'élément de réseau est en outre adapté pour
• la transmission des informations d'interception licites (IPS) entre l'élément de réseau (FAP) et le réseau central mobile (MCN) par l'intermédiaire de la deuxième interface (IF2) à l'entité d'interception licite (LI), si la bande passante disponible déterminée dépasse une valeur prédéterminée, et pour
• la transmission des informations d'interception licites (IPS) de l'élément de réseau (FAP) qui est attribué à la cellule à la station de base (BTS) par l'intermédiaire de l'interface radio (IFR) si la bande passante disponible déterminée ne dépasse pas la valeur prédéterminée.

12. L'élément de réseau selon l'une quelconque des revendications 6 à 11, dans lequel
l'élément de réseau (FAP) est configuré de façon à exécuter au moins une règle de sélection de trajet de transmission en fonction d'informations relatives à une procédure d'interception légale.

13. L'élément de réseau selon la revendication 12, dans lequel l'élément de réseau (FAP) est adapté pour
- l'évaluation de la règle de sélection de trajet de transmission et pour
- la transmission des informations d'interception licites (IPS) à l'entité d'interception licite (LI) selon la règle de sélection de trajet de transmission.

14. L'élément de réseau selon l'une quelconque des revendications 6 à 13, dans lequel
l'élément de réseau (FAP) est adapté de façon à accorder un accès à la cellule qui est couverte par l'élément de réseau (FAP) à un équipement d'utilisateur de surveillance spécialement autorisé (MUE), dans lequel l'équipement d'utilisateur de surveillance spécialement autorisé (MUE) est adapté de façon à sonder des dispositifs locaux.

15. Un support lisible par ordinateur sur lequel est conservé en mémoire un programme informatique pour la fourniture d'informations d'interception licites (IPS) à une entité d'interception licite (LI) d'un réseau de télécommunication mobile, le programme informatique, lorsqu'il est exécuté par un processeur de données d'un élément de réseau qui est attribué à une cellule du réseau de communication mobile, est adapté de façon à exécuter le procédé selon l'une quelconque des revendications 1 à 5.

16. Un programme informatique destiné à la fourniture d'informations d'interception licites (IPS) à une entité d'interception licite (LI) d'un réseau de télécommunication mobile, le programme informatique, lorsqu'il est exécuté par un processeur de données d'un élément de réseau qui est attribué à une cellule du réseau de communication mobile, est adapté de façon à exécuter le procédé selon l'une quelconque des revendications 1 à 5.
